Europäisches Patentamt

European Patent Office

Office européen des brevets

(11) Veröffentlichungsnummer: **0 492 079 A1**

# EUROPÄISCHE PATENTANMELDUNG

(21) Anmeldenummer: **91118119.6**

(22) Anmeldetag: **24.10.91**

(51) Int. Cl.5: **C01B 21/068**

(30) Priorität: **24.11.90 DE 4037449**

(43) Veröffentlichungstag der Anmeldung:
**01.07.92 Patentblatt 92/27**

(84) Benannte Vertragsstaaten:
**CH DE FR GB IT LI SE**

(71) Anmelder: **HOECHST AKTIENGESELLSCHAFT**
**Postfach 80 03 20**
**W-6230 Frankfurt am Main 80(DE)**

(72) Erfinder: **Krause, Werner, Dr.**
**Henriette-Lott-Weg 8**
**W-5030 Hürth(DE)**

(54) **Verfahren zur Herstellung von kugelförmigem amorphem Siliciumnitrid.**

(57) Zur Herstellung von kugelförmigem amorphem Siliciumnitrid ($Si_3N_4$) setzt man Siliciumhalogenid und Ammoniak in der Dampfphase in Abwesenheit von Wasser bzw. Wasserdampf in einem vertikal angeordneten Reaktionsbehälter unter Bildung eines Siliciumhalogenid-Ammoniak-Reaktionsproduktes um. Dabei werden in den unteren Teil des Reaktionsbehälters ein Siliciumhalogenid-Inertgas-Gemisch und in seinem oberen Teil Ammoniak im Verhältnis $SiHal_4 : NH_3 = 1 : (5,8$ bis $6,6)$ eingeleitet. Durch Einstellung eines stationären Zustandes erfolgt die Umsetzung nur im mittleren Teil des Reaktionsbehälters. Nachdem man das Siliciumhalogenid-Ammoniak-Reaktionsprodukt aus dem Reaktionsbehälter entnommen hat, erhitzt man in Ammoniak enthaltender Atmosphäre auf Temperaturen von 950 bis 1150 °C.

Fig.1

EP 0 492 079 A1

Die vorliegende Erfindung betrifft ein Verfahren zur Herstellung von kugelförmigem amorphem Siliciumnitrid (Si₃N₄) durch Erhitzen eines Siliciumhalogenid-Ammoniak-Reaktionsproduktes in Abwesenheit von Wasser bzw. Wasserdampf.

Dicht gesintertes Siliciumnitrid (SSN) ist ein Werkstoff, der sich u.a. durch hohe Festigkeit und Korrosionsbeständigkeit auch bei hohen Temperaturen auszeichnet und darüber hinaus gegenüber metallischen Werkstoffen mit 3,2 g/cm³ eine relativ geringe Dichte aufweist. Daher ist dicht gesintertes Siliciumnitrid ein interessanter Konstruktionswerkstoff beispielsweise im Motoren- und Turbinenbau.

Um ein dicht gesintertes Siliciumnitrid mit den gewünschten Werkstoffeigenschaften zu erhalten, ist es erforderlich, zur Sinterung ein Siliciumnitridpulver einzusetzen, welches sehr rein ist, aus rundlichen Teilchen mit Partikelgrößen < 1 $\mu$m besteht und einen geringen Anteil an $\beta$-Si₃N₄ aufweist (vergl. G. Wötting und G. Ziegler in: SPRECHSAAL, 120 (1987) S. 96 bis 99).

Zur Herstellung von Siliciumnitridpulvern dienen verschiedene Verfahren:

a) Direktnitridierung

$$3Si + 2N_2 \longrightarrow Si_3N_4$$

b) Carbothermie

$$3SiO_2 + 6C + 2N_2 \longrightarrow Si_3N_4 + 6CO$$

c) Diimid-Umsetzung

$$SiCl_4 + 6NH_3 \longrightarrow Si(NH)_2 + 4NH_4Cl \quad 3Si(NH)_2 \longrightarrow Si_3N_4 + 2NH_3$$

d) Gasphasenreaktion

$$3SiCl_4 + 4NH_3 \longrightarrow Si_3N_4 + 4HCl$$

Ein Verfahren gemäß c) ist aus der US-PS 3 959 446 bekannt. Danach wird hochreines flüssiges Siliciumtetrachlorid und wasserfreies Ammoniakgas in trockenem Benzol oder n-Hexan bei Temperaturen von -10°C bis +5°C unter Bildung einer ausfallenden Mischung von Siliciumdiimid und Ammoniumchlorid zur Reaktion gebracht. Nach Abdestillieren des Lösungsmittels liegt die Mischung in feinverteilter Form vor. Die trockene Mischung wird unter Vakuum oder in Inertgasatmosphäre auf 1200 bis 1350°C erhitzt und mehrere Stunden bei dieser Temperatur gehalten. Nach Abkühlen liegt feinteiliges $\alpha$-Si₃N₄ vor.

Nachteilig ist dabei, daß die zwischenzeitlich anfallende Mischung von Siliciumdiimid und Ammoniumchlorid aus unregelmäßig geformten Teilchen mit Partikelgrößen von < 1 $\mu$m bis ca. 20 $\mu$m besteht und daher ein schlechtes Fließverhalten aufweist, was bei ihrer Förderung und Weiterverarbeitung Schwierigkeiten bereitet.

Es ist daher Aufgabe der vorliegenden Erfindung, ein Verfahren zur Herstellung von kugelförmigem Siliciumnitrid anzugeben, dessen in einem engen Durchmesserintervall liegende Teilchen ein gutes Fließverhalten aufweisen. Das wird erfindungsgemäß dadurch erreicht, daß man Siliciumtetrahalogenid und Ammoniak in der Dampfphase in einem vertikal angeordneten Reaktionsbehälter unter Bildung des Siliciumhalogenid-Ammoniak-Reaktionsproduktes umsetzt, wobei in den unteren Teil des Reaktionsbehälters ein Siliciumhalogenid-Inertgas-Gemisch und in seinen oberen Teil Ammoniak im Verhältnis SiHal₄ : NH₃ = 1 : (5,8 bis 6,6) eingeleitet werden, daß durch Einstellung eines stationären Zustandes die Umsetzung nur im mittleren Teil des Reaktionsbehälters erfolgt, und daß man das Siliciumhalogenid-Ammoniak-Reaktionsprodukt aus dem Reaktionsbehälter entnimmt und in Ammoniak enthaltender Atmosphäre auf Temperaturen von 950 bis 1150°C erhitzt.

Das Verfahren gemäß der Erfindung kann weiterhin wahlweise auch noch dadurch ausgestaltet sein, daß

a) das Siliciumhalogenid-Inertgas-Gemisch durch Durchleiten von Inertgas durch auf Temperaturen von 0 bis 57°C gehaltenes flüssiges Siliciumhalogenid erhalten wird;

b) in den unteren Teil des Reaktionsbehälters zusätzlich Inertgas eingeleitet wird;

c) das Volumenverhältnis des Inertgases zum Siliciumhalogenid-Inertgas-Gemisch (100 bis 0,1) : 1 beträgt;

d) die Einstellung bzw. Aufrechterhaltung des stationären Zustandes im Reaktionsbehälter durch Regelung der Mengenströme von Siliciumhalogenid-Inertgas-Gemisch und/oder Ammoniak und/oder zusätzlichem Inertgas erfolgt;

e) als Siliciumhalogenid Siliciumtetrachlorid (SiCl₄), Trichlorsilan (SiHCl₃) oder deren Mischungen eingesetzt werden;

f) als Inertgas Stickstoff dient.

Beim erfindungsgemäßen Verfahren trifft das von unten eingeleitete, spezifisch schwere Siliciumhalogenid-Inertgas-Gemisch in der Behältermitte mit dem von oben zuströmenden Ammoniakgas unter Bildung von kugelförmigem Siliciumhalogenid-Ammoniak-Reaktionsprodukt zusammen, wobei trotz der heftigen Reaktion überraschenderweise keine Vermischung des gesamten Behälterinhaltes erfolgt. Vielmehr nimmt von dem sich im unteren Teil des Reaktionsbehälters befindlichen Siliciumhalogenid-Stickstoff-Gasgemisch im wesentlichen nur dessen obere Grenzfläche an der Reaktion teil.

Beim Verfahren gemäß der Erfindung sammelt sich das in der Gasphase gebildete Siliciumhalogenid-Ammoniak-Reaktionsprodukt im unteren, reaktionsfreien Bereich des Reaktionsbehälters als kugelförmige Teilchen. Da damit diese Teilchen einer Nachreaktion an ihrer Oberfläche entzogen sind, bleiben sie in ihrer äußeren Form unverändert und verbacken nicht miteinander.

Beim erfindungsgemäßen Verfahren hängt die Teilchengröße des gebildeten Siliciumhalogenid-Ammoniak-Reaktionsproduktes von der Sinkgeschwindigkeit der Teilchen in der Reaktionszone ab. Durch Einleiten eines zusätzlichen Inertgasstromes in den unteren Teil des Reaktionsbehälters und damit entgegen der Sinkrichtung läßt sich die Verweilzeit in der Reaktionszone und damit der mittlere Teilchendurchmesser des Siliciumhalogenid-Ammoniak-Reaktionsproduktes erhöhen.

Das beim Verfahren gemäß der Erfindung anfallende Siliciumhalogenid-Ammoniak-Reaktionsprodukt ist aufgrund seiner kugelförmigen Ausbildung ausgezeichnet fließfähig und kann deshalb aus dem unteren Teil des Reaktionsbehälters in einfacher Weise, beispielsweise durch Öffnen eines Kugelhahnes, entnommen und problemlos mit Hilfe einer Schnecke in einen Glühofen gefördert werden.

Die Kugelform und der mittlere Teilchendurchmesser bleiben beim erfindungsgemäßen Verfahren auch dann noch erhalten, wenn das Siliciumhalogenid-Ammoniak-Reaktionsprodukt in Ammoniak enthaltender Atmosphäre auf Temperaturen zwischen 950 und 1150°C erhitzt wird.

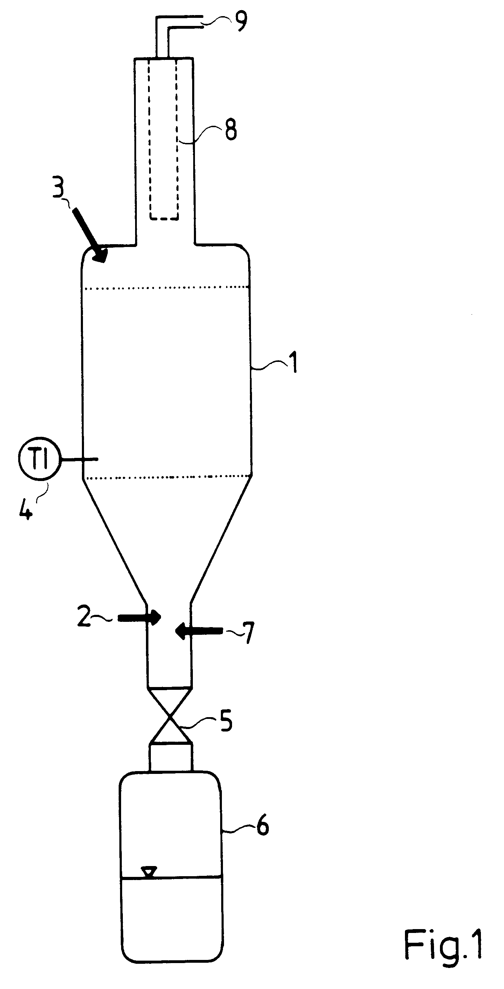

Der näheren Erläuterung des erfindungsgemäßen Verfahrens dient die Figur 1.

In den unteren Teil des Reaktionsbehälters 1 wird über eine erste Leitung 2 ein Siliciumhalogenid-Stickstoff-Gasgemisch eingeleitet, während in den oberen Teil über eine zweite Leitung 3 Ammoniak zugeführt wird. In der Mitte des Behälters 1 reagieren die beiden Komponenten zu einem Reaktionsprodukt, das aus einzelnen kugelförmigen Partikeln besteht. Mit Hilfe von Temperaturmeßeinrichtungen 4 wird der Verlauf der Reaktion kontrolliert. Das Reaktionsprodukt sammelt sich im Konus des Reaktionsbehälters 1 und wird von Zeit zu Zeit über einen Hahn 5 in einen Sammelbehälter 6 abgelassen. Durch Einblasen eines zusätzlichen Inertgasstromes über eine dritte Leitung 7 werden kleinere Partikel wieder in die Reaktionszone gefördert, wo sie erneut an der Reaktion teilnehmen, so daß sich auf diese Weise der mittlere Partikeldurchmesser des Reaktionsproduktes erhöhen läßt. Nicht umgesetztes Ammoniak sowie das Inertgas werden mit Hilfe eines Filters 8 von mitgerissenen Feinstanteilen befreit und über eine Abgasleitung 9 abgeführt. Die erste Leitung 1 und die zweite Leitung 2 für die Komponenten bleiben völlig frei von Verkrustungen, da diese Leitungen in solchen Bereichen des Reaktionsbehälters 1 angeordnet sind, in denen keine Reaktion stattfindet. Auch bei kontinuierlichem Betrieb belegen sich die Behälterwandungen nicht mit festhaftenden Pulverschichten.

Beispiel 1

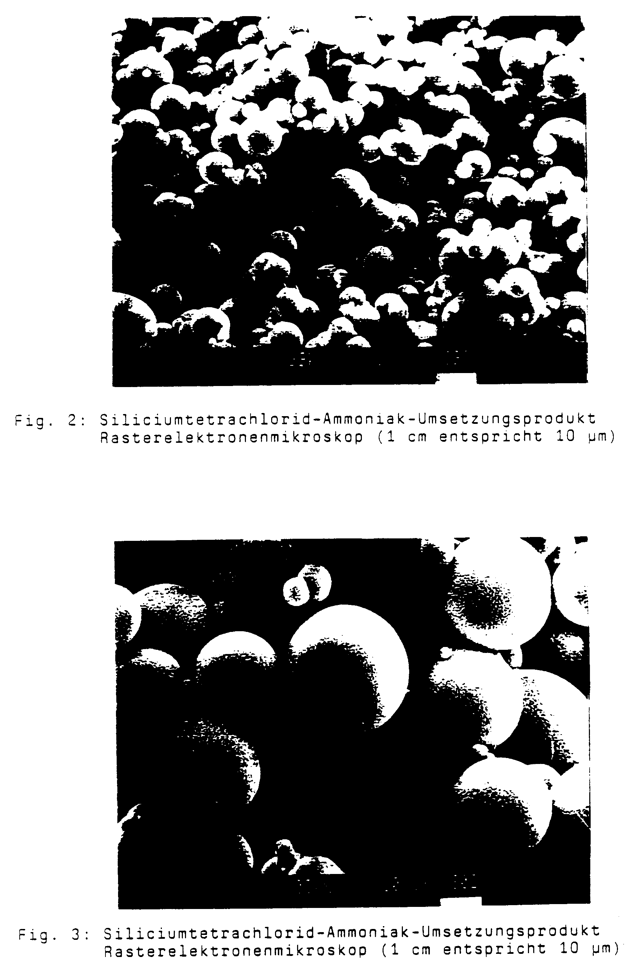

Ein senkrecht stehender Reaktionsbehälter 1 (vergl. Figur 1) ist in seinem unteren Teil als Konus ausgebildet, wobei von der Konusspitze ein mit einem Kugelhahn 5 verschlossenes Rohr abgeht. In die an die Konusspitze angesetzte erste Leitung 2 wird ein Siliciumtetrachlorid-Stickstoff-Gasgemisch eingeleitet, welches durch Durchleiten von 200 l/h Stickstoff durch auf ca. 25°C gehaltenes Siliciumtetrachlorid erhalten worden war und welches pro Stunde 0,5 kg Siliciumtetrachlorid enthielt. In den oberen Teil des Reaktionsbehälters 1 strömten über die zweite Leitung 3 450 l/h getrocknetes Ammoniakgas ein. Bei teilweise geöffnetem Kugelhahn 5 fielen 0,8 kg/h Siliciumtetrachlorid-Ammoniak-Reaktionsprodukt in den Sammelbehälter 6. Nach Erhitzen des Siliciumtetrachlorid-Ammoniak-Reaktionsproduktes im Glühofen auf 1000°C wurde ein kugelförmiges amorphes Siliciumnitrid mit Teilchengrößen von 5 bis 10 μm erhalten, dessen Gehalt an Chlor < 0,5 Gewichts-% sowie an Kohlenstoff < 0,06 Gewichts-% betrug und welches eine spezifische Oberfläche (bestimmt nach der Methode von Brunauer, Emett und Teller; vergl. Z. Anal. Chem. $\overline{238}$ (1968), Seiten $\overline{187}$ bis 193) von 360 m²/g aufwies. Eine mikroskopische Aufnahme des erhaltenen Siliciumnitrids zeigt Figur 2.

Beispiel 2

Beispiel 1 wurde mit der Änderung wiederholt, daß zusätzlich über die dritte Leitung 7 500 l/h Stickstoff in den unteren Bereich des Reaktionsbehälters 1 eingeführt wurden. Bei teilweise geöffnetem Kugelhahn 5 fielen 0,8 kg/h Siliciumtetrachlorid-Ammoniak-Reaktionsprodukt in den Sammelbehälter 6.
Nach Erhitzen des Siliciumtetrachlorid-Ammoniak-Reaktionsproduktes im Glühofen auf 1000°C wurde ein amorphes Siliciumnitrid in Form kugelförmiger Teilchen mit 25 bis 30 μm Durchmesser erhalten, dessen Gehalt an Chlor < 0,5 Gewichts-% sowie an Kohlenstoff < 0,06 Gewichts-% betrug und welches eine spezifische Oberfläche (bestimmt nach der BET-Methode; vergl. Beispiel 1) von 350 m²/g aufwies. Eine mikroskopische Aufnahme des erhaltenen Siliciumnitrids zeigt Figur 3.

**Patentansprüche**

1. Verfahren zur Herstellung von kugelförmigem amorphem Siliciumnitrid ($Si_3N_4$) durch Erhitzen eines Siliciumhalogenid-Ammoniak-Reaktionsproduktes in Abwesenheit von Wasser bzw. Wasserdampf, dadurch gekennzeichnet, daß man Siliciumhalogenid und Ammoniak in der Dampfphase in einem vertikal angeordneten Reaktionsbehälter unter Bildung des Siliciumhalogenid-Ammoniak-Reaktionsproducktes umsetzt, wobei in den unteren Teil des Reaktionsbehälters ein Siliciumhalogenid-Inertgas-Gemisch und in seinem oberen Teil Ammoniak im Verhältnis Si-Hal₄ : NH₃ = 1 : (5,8 bis 6,6) eingeleitet werden, daß durch Einstellung eines stationären Zustandes die Umsetzung nur im mittleren Teil des Reaktionsbehälters erfolgt, und daß man das Siliciumhalogenid-Ammoniak-Reaktionsprodukt aus dem Reaktionsbehälter entnimmt und in Ammoniak enthaltender Atmosphäre auf Temperaturen von 950 bis 1150°C erhitzt.

2. Verfahren nach Anspruch 1, dadurch gekennzeichnet, daß das Siliciumhalogenid-Inertgas-Gemisch durch Durchleiten von Inertgas durch auf Temperaturen von 0 bis 57°C gehaltenes flüssiges Siliciumhalogenid erhalten wird.

3. Verfahren nach Anspruch 1 oder 2, dadurch gekennzeichnet, daß in den unteren Teil des Reaktionsbehälters zusätzlich Inertgas eingeleitet wird.

4. Verfahren nach mindestens einem der Ansprüche 1 bis 3, dadurch gekennzeichnet, daß das Volumenverhältnis des Inertgases zum Siliciumhalogenid-Inertgas-Gemisch (100 bis 0,1) : 1 beträgt.

5. Verfahren nach mindestens einem der Ansprüche 1 bis 4, dadurch gekennzeichnet, daß die Einstellung bzw. Aufrechterhaltung des stationären Zustandes im Reaktionsbehälter durch Regelung der Mengenströme von Siliciumhalogenid-Inertgas-Gemisch und/oder Ammoniak und/oder zusätzlichem Inertgas erfolgt.

6. Verfahren nach mindestens einem der Ansprüche 1 bis 5, dadurch gekennzeichnet, daß als Siliciumhalogenid Siliciumtetrachlorid (SiCl₄), Trichlorsilan (SiHCl₃) oder deren Mischungen eingesetzt werden.

7. Verfahren nach mindestens einem der Ansprüche 1 bis 6, dadurch gekennzeichnet, daß als Inertgas Stickstoff dient.

Fig.1

Fig. 2: Siliciumtetrachlorid-Ammoniak-Umsetzungsprodukt
Rasterelektronenmikroskop (1 cm entspricht 10 µm)

Fig. 3: Siliciumtetrachlorid-Ammoniak-Umsetzungsprodukt
Rasterelektronenmikroskop (1 cm entspricht 10 µm)

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 070 440 (ASAHI GLASS COMPANY LTD) <br> * Beispiel 1 * <br> --- | 1 | C01B21/068 |
| A | PATENT ABSTRACTS OF JAPAN <br> vol. 13, no. 315 (C-619)(3663) 18. Juli 1989 <br> & JP-A-1 100 005 ( AGENCY OF INO SCIENCE & TECHNOLOGY ) 18. April 1989 <br> * Zusammenfassung * <br> --- | 1 | |
| A | PATENT ABSTRACTS OF JAPAN <br> vol. 14, no. 382 (C-749)(4325) 17. August 1990 <br> & JP-A-2 141 408 ( MITSUI TOATSU CHEM INC ) 30. Mai 1990 <br> * Zusammenfassung * <br> ----- | 1 | |

**RECHERCHIERTE SACHGEBIETE (Int. Cl.5 )**

C01B

Der vorliegende Recherchenbericht wurde für alle Patentansprüche erstellt

| Recherchenort | Abschlußdatum der Recherche | Prüfer |
|---|---|---|
| BERLIN | 26 MAERZ 1992 | CLEMENT J-P. |